# EUROPEAN PATENT APPLICATION

(11) **EP 3 106 905 A1**
(43) Date of publication of application: **21.12.2016**
(21) Application number: 15172370.7
(22) Date of filing: 16.06.2015
(51) Int. Cl.: G02B 6/42

(54) **MID BOARD OPTICAL MODULE (MBOM) PRIMARY HEAT SINK**

(71) Applicant: Tyco Electronics Svenska Holdings AB, 175 26 Jaerfaella (SE)
(72) Inventor: STEIJER, Odd Robert, 16868 Bromma (SE); ANDERSSON, Magnus, 17770 Jaerfaella (SE); SVENSON, Lars-Goete, 19133 Sollentuna (SE); KALLEN, Elisabeth Maria, 11735 Stockholm (SE); JOHANSSON, Asa Christina, 19638 Kungsaengen (SE); NIDELIUS, David Patrik, 17677 Jaerfaella (SE)
(74) Representative: Grünecker Patent- und Rechtsanwälte PartG mbB

(57) **Abstract**

The present invention relates to an optical module for high-speed data communications, comprising a carrier substrate (100) adapted to mount an optical device (200), and a primary heat sink (300) adapted to transfer heat produced by the optical device, wherein at least one of a first side and a second side of the primary heat sink is adapted to mount the carrier substrate thereon. In addition, the primary heat sink may include guiding structures (301,303) adapted to mate with corresponding guiding structures (106,107) provided on the carrier substrate for aligning and fixing the carrier substrate on the primary heat sink. The primary heat sink (300) may also include thermal ports (304) for establishing a thermal interface with an external heat sink (500). The primary heat sink of the present invention makes possible to significantly improve the thermal and/or mechanical interfaces of the optical module as well as density packaging.

## Description

### TECHNICAL FIELD OF THE INVENTION

The present invention relates to optical modules and optical interconnects for high speed data communications, and more particularly, to a mid-board optical module having a primary heat sink for dissipation of the heat produced by the components mounted within the optical module.

### BACKGROUND OF THE INVENTION

In order to respond to the continuous need for faster data communication rates and increased bandwidth in a variety of applications such as server-to-server data exchange, storage applications, and in communication systems, there has been a significant interest in fiber optic technologies, and in particular, in high-speed optical interconnects.

In this context, embedded high-speed optical transceivers technologies, also known as mid board optics, have emerged in recent years in an effort to provide high-speed optical interconnects that can be easily integrated inside computers and communication systems while still meeting the requirements for higher I/O densities and reduced electrical losses at the speeds of interest, such as at and above 25 Gb/s. Embedded mid-board optical (MBO) devices allow providing an internal I/O connection based on optical data transmission directly on the printed circuit board of the device/system to be interfaced, thereby achieving ultra-high-bandwidth density. As an example of an embedded MBO device, TE Connectivity (TE) has recently developed a MBO module, also known as "Cool-Bit MBOM". This MBO module is a 12-channel transceiver capable of transmitting and receiving data for a total band width of 300 Gb/s per square inch while consuming extremely low power, approximately less than 4.5 Watts.

In order to further improve transmission speed and reduce module foot-print for optical interconnects, harder requirements on thermal, mechanical, electrical and optical interfaces of MBO devices have to be met as the demand on dense packaging continually increases (Gbit/s/in2).

### SUMMARY OF THE INVENTION

The present invention has been made in view of the shortcomings and disadvantages of the prior art, and an object thereof is to provide an integrated solution for optical modules such as mid-board, high-speed multi-channel optical transceiver modules, that optimizes at least two of the mechanical, thermal, optical and electrical interfacing of the optical module so as to achieve dense packaging.

This object is solved by the subject matter of the independent claims. Advantageous embodiments of the present invention are subject matter of the dependent claims.

According to the present invention, it is provided an optical module for high-speed data communications, comprising a carrier substrate adapted to mount an optical device; and a primary heat sink adapted to transfer heat produced by the optical device; wherein at least one of a first side and a second side of the primary heat sink is adapted to mount the carrier substrate thereon.

According to a further development, the primary heat sink further comprises a thermal pedestal adapted to establish thermal coupling with the optical device mounted on the carrier substrate. The thermal pedestal may be provided as an elevation area on the side of the primary heat sink facing the optical device and adapted to be thermally interfaced with the optical device through an opening provided in the carrier substrate below the optical device.

The optical module may further comprise a thermal interface material arranged between the thermal pedestal and the optical device for reducing thermal resistance.

In a further development the primary heat sink further comprises guiding means adapted to mate with corresponding guiding structures provided on the carrier substrate so as to align the carrier substrate, the guiding means being provided on at least one of the first side and the second side. The carrier substrate may be a flexible carrier substrate.

According to a further development, the carrier substrate comprises a first rigid part adapted to arrange the optical device thereon; a second rigid part adapted to arrange an electrical interface of the optical module; and a flexible intermediate part adapted to permanently connected the first rigid part to the second rigid part, wherein the first rigid part and the second rigid part are adapted to be respectively mounted on the first side and the second side of the primary heat sink, and the flexible intermediate part is adapted to extend from the first side to the second side of the primary heat sink when the carrier substrate is mounted on the primary heat sink.

In a further development, the carrier substrate further comprises a flexible tail part connected to an edge of the second rigid part opposed to an edge connected to the flexible intermediate part and comprising an end section adapted to overlap with an end section of the first rigid part at the first side of the primary heat sink, wherein each of the end sections of the flexible tail part and the first rigid part comprise one or more matching guiding holes adapted to mate with one or more guiding pins provided on the first side of the primary heat sink in order to establish an electrical connection.

According to a further development, the second rigid part further comprises a first set of guiding structures adapted to mate with corresponding guiding means provided on the second side of the primary heat sink for aligning the second rigid part; and/or a second set of guiding structures adapted to allow guiding structures provided on a socket connector to pass through for engaging with the second rigid part of the carrier substrate.

According to a further development, the primary heat sink further comprises a thermal port adapted to establish thermal coupling with a secondary heat sink provided above the optical device and the carrier substrate.

According to a further development, the thermal port may comprise at least two thermal ports provided at lateral sides of the primary heat sink parallel to an optical coupling direction.

According to a further development, the secondary heat sink and the primary heat sink may be shaped so as to form an opening in the optical module for passing a fiber ribbon through the optical module.

According to a further development, the primary heat sink is formed from a single piece and/or is made from one or more high thermal conductivity materials, such as metal materials.

The present invention also provides a method of producing a primary heat sink for an optical module according to the invention, the method comprising the steps of providing a piece of a high thermal conductivity material; forming at least one of a first side and a second side of the primary heat sink that are adapted to mount the carrier substrate thereon.

The method may further comprise a step of forming a thermal pedestal adapted to establish thermal coupling with the optical device mounted on the carrier substrate on the first side of the primary heat sink.

According to a further development, the method further comprises the steps of forming guiding means on at least one of the first side and the second side of the primary heat sink for mating with corresponding guiding structures provided on the carrier substrate; and providing a thermal port adapted to establish thermal coupling with a secondary heat sink provided above the optical device and the carrier substrate.

According to a further development, it is provided a primary heat sink for an optical module, the optical module having a carrier substrate adapted to mount an optical device thereon, the primary heat sink being adapted to transfer heat produced by the optical device, the primary heat sink comprising: at least one of a first side and a second side adapted to mount the carrier substrate thereon so as to transfer heat produced by the optical device.

According to a further development, the primary heat sink further comprises: guiding means adapted to mate with corresponding guiding structures provided on the carrier substrate so as to align the carrier substrate, the guiding means being provided on at least one of the first side and the second side; and/or a thermal pedestal adapted to establish thermal coupling with the optical device mounted on the carrier substrate.

The accompanying drawings are incorporated into and form a part of the specification for the purpose of explaining the principles of the invention. The drawings are not to be construed as limiting the invention to only the illustrated and described examples of how the invention can be made and used.

### BRIEF DESCRIPTION OF THE FIGURES

Further features and advantages will become apparent from the following and more detailed description of the invention as illustrated in the accompanying drawings, in which:
**Fig. 1** shows an exploded view of an optical module according to an embodiment of the present invention and an optical fiber connection to be coupled to the optical module along a coupling direction L;
**Fig. 2** is a top view of a flexible carrier substrate of the optical module shown in Fig. 1, depicted in an unfolded state;
**Fig. 3A** is a perspective view of a primary heat sink of the optical module shown in Fig. 1, viewed from a top side;
**Fig. 3B** is a perspective view of the primary heat sink shown in Fig. 3A when viewed from a bottom side;

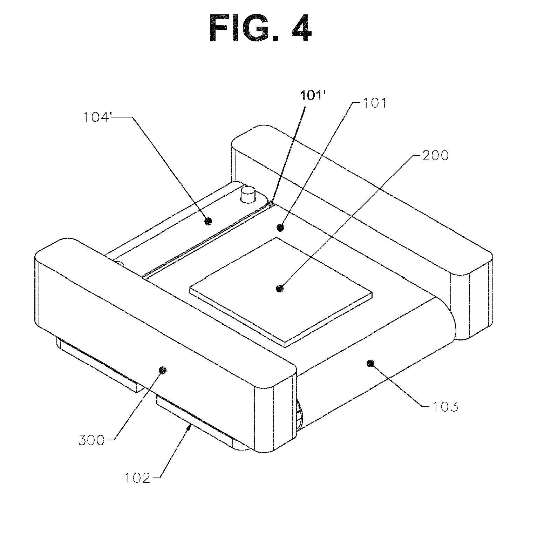

**Fig. 4** is a perspective representation of the flexible carrier substrate illustrated in Fig. 2 wrapped around the primary heat sink shown in figures 3A-3B, thereby forming a closed loop;
**Fig. 5** shows a further perspective view of the flexible carrier substrate wrapped around the primary heat sink, and an enlarged view of an area where a tail part of the flexible carrier substrate joins an upper side of the flexible carrier substrate for closing the loop;
**Fig. 6** is a cross sectional view of the flexible carrier substrate wrapped around the primary heat sink shown in figures 4 - 5;
**Fig. 7** is a perspective view showing the optical module of Fig. 1 after being assembled, an optical fiber connection coupled to the optical module and a further optical fiber connection passing-through the optical module; and
**Fig. 8** is a further perspective representation of the flexible carrier substrate wrapped around the primary heat sink shown in figures 4 - 5, when viewed from a bottom side.

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein. Rather, these embodiments are provided so that the disclosure will be thorough and complete, and will fully convey the scope of the invention to those skilled in the art. Like numbers refer to like elements throughout.

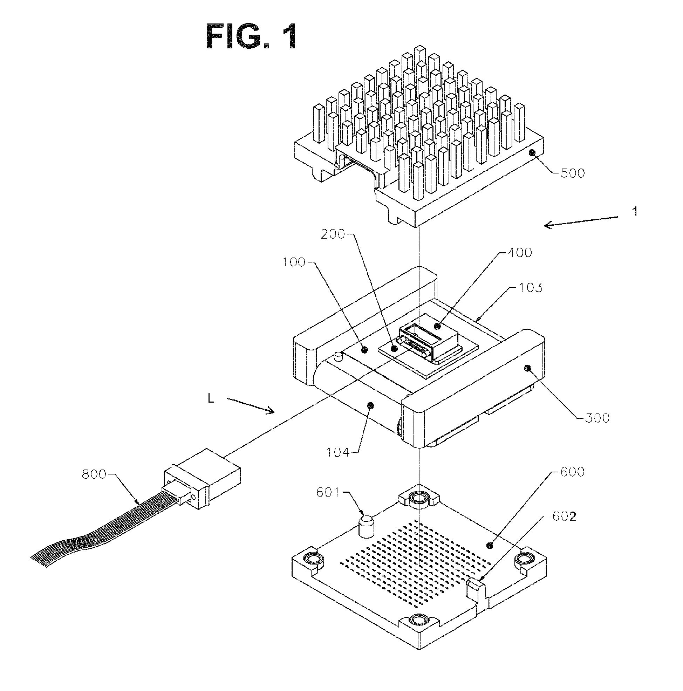

Referring to Fig. 1, an exploded view of an optical module 1 according to the present invention is shown. The optical module 1 is preferably a mid-board optical (MBO) module, such as a high-speed multi-channel optical transceiver module capable of operating plurality of transmit and receive channels, each having a high speed signal rate (for e.g. 25Gb/s) within a foot-print of one square inch. However, the principles of the present invention can be advantageously applied to other optical transceiver modules having more or less transmit and receive channels, and/or to other optical receivers and optical transmitters.

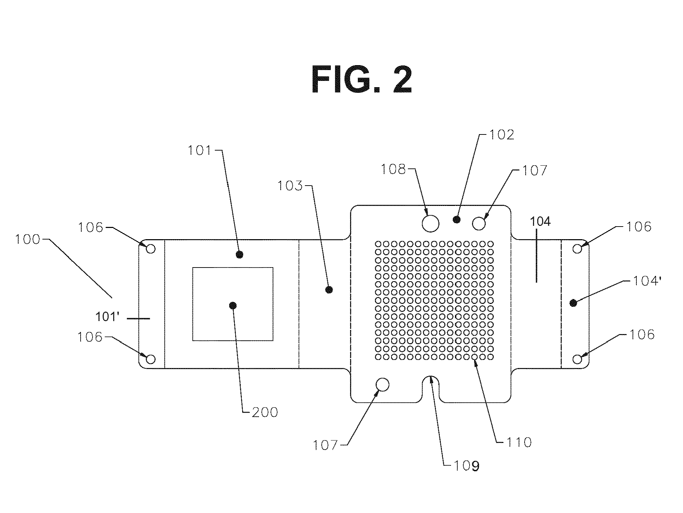

The optical module 1 comprises a carrier substrate 100 for mounting an optical device 200 thereon. The carrier substrate 100 is mounted on an inner body 300 of the optical module 1. In the illustrated example, the carrier substrate 100 is provided with a foldable design that allows distributing the electrical interfacing between a top side and a bottom side of the optical module 1 as it will be described with reference to figure 2.

In the present embodiment, the optical device 200 is an optical engine, i.e. a self-contained electrical to optical transceiver (or separate transmitter and receiver) unit capable of providing high-speed data transfer per channel and which can be mounted on a printed circuit board (PCB) or IC package, such as a VCSEL-based optical engine. In order to optically couple the optical device 200 with an incoming optical fiber connection 800, the optical module 1 may comprise an optical interface 400 that receives the optical fiber connection 800. In the illustrated configuration, the optical interface 400 and the optical device 200 are oriented with respect to the inner body 300 such as to optically couple with the optical fiber connection 800 along a longitudinal direction L that is substantially parallel to the face of the inner body 300 where the optical device 200 is arranged.

The electrical interfacing of the optical module 1 with external circuitry (not shown) may be provided by a socket connector 600. Preferably, the socket connector 600 is of a Land Grid Array (LGA) or a Ball Grid Array (BGA) type (typically, the socket interfaces to the module's LGA pads by flexible metal beams, and to the host board by a BGA), which allows the transfer of large amounts of data at high speeds and provides a better electrical interface than through-hole connectors. In the illustrated example, the socket connector 600 is adapted to engage with a bottom side of the optical module 1, i.e. the side opposed to the side where the optical interface 400 is provided.

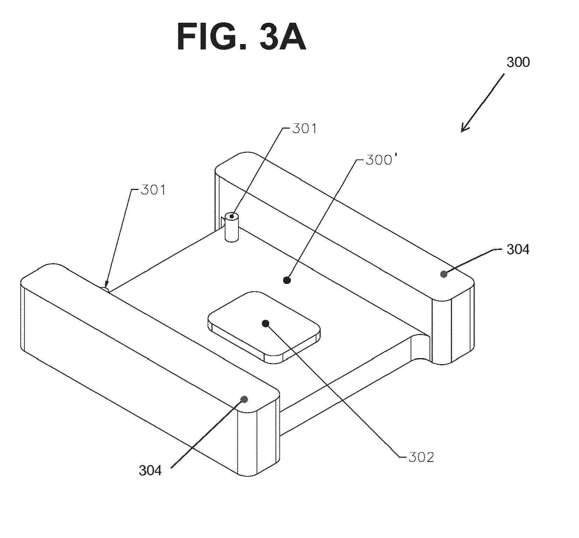

The inner body 300, which serves as a mounting support for the carrier substrate 100, is equipped with additional features for conferring reliable mechanical and/or thermal interfaces to the optical module 1, as it will be described later with reference to figures 3A-3B. The inner body 300 is made from one or more high thermal conductivity materials, preferably a metal such as Aluminum, so as to provide an effective dissipation of the heat produced by the optical device 200 and/or other components mounted on the carrier substrate 100, thereby acting as primary heat sink of the optical module 1. For simplicity, the inner body 300 will be referred to in the following as a primary heat sink.

The optical module 1 may also comprise an external heat sink 500, such as an air-cooled heat sink, for dissipating the heat absorbed by the primary heat sink 300. As shown in Fig. 1, the external heat sink 500 may be configured to mechanically engage from an upper side of the optical module 1 with features of the primary heat sink 300 that also provide the thermal coupling interface to the external heat sink 500. The optical device 200 is then enclosed by the primary heat sink 300 and the secondary heat sink 500 when the optical module 1 is assembled. In this configuration, the heat produced by the optical module 200 is transferred to the external heat sink 500 via the primary heat sink 300. Thus, the external heat sink 500 acts as a secondary heat sink of the optical module 1.

In order to meet the requirements on dense packaging, the carrier substrate 100 may be advantageously provided with foldable features that allow orienting the several components mounted onto the carrier substrate 100 in different directions and distribute them over several faces of the primary heat sink 300. The arrangement of the optical and electrical interfaces may then be spatially distributed, such as shown in Fig. 1 where the optical interface 400 is provided on the top side of the optical module 1 and the electrical interface 110 on the opposed, bottom side.

Referring to Fig. 2, the foldable carrier substrate 100 may be advantageously provided as a flexible PCB with a design that allows the flexible PCB to wrap around the primary heat sink 300. In the illustrated example, the flexible PCB 100 comprises a first part 101 adapted to carry the optical device 200 containing the optical dies and integrated circuits, and a second part 102 on which electrical interface elements 110 are provided for electrically interfacing the flexible PCB 100 with the mating socket connector 600. In the present embodiment, the first and second parts 101 and 102 of the flexible PCB 100 are preferably rigid so as to provide mechanical stability to the areas of the flexible PCB 100 where the electronic and optical components are mounted. In this sense, the flexible PCB 100 is only partially flexible. However, the first and second parts could also be made from a flexible material.

The first and second rigid parts 101 and 102 of the flexible PCB 100 are permanently connected to each other by a flexible intermediate part 103, simply referred to as flex part 103, for changing the relative orientation between the first and second rigid parts 101 and 102. The width of the flex part 103 is such as to bridge the distance between the first rigid part 101 and the second rigid part 102 when mounted on opposed faces of the primary heat sink 300.

The flexible PCB 100 may also comprise a flexible tail 104, simply referred to as flex tail 104, connected to an edge of the second rigid part 102 parallel to and opposed to the edge connected to the flex part 103. The flex tail 104 is provided for electrically connecting the second rigid part 102 to an end section 101' of the first rigid part 101 in such a manner that the flexible PCB 100 can be entirely wrapped around the primary heat sink 300, thereby creating a closed loop. The flex tail 104 may be provided with an end section 104' that overlaps an end section 101' of the first rigid part 101 when the flexible PCB 100 is wrapped around the primary heat sink 300. Such overlapping is preferably provided on the side of the flexible PCB 100 where the optical device 200 is mounted for improving mechanical stability of the electrical connection. The flex tail 104 is provided with a width sufficient for bridging the distance between the first rigid part 101 and the second rigid part 102 mounted on opposed faces of the primary heat sink 300 and for overlapping the end section 101' of the first rigid part 101.

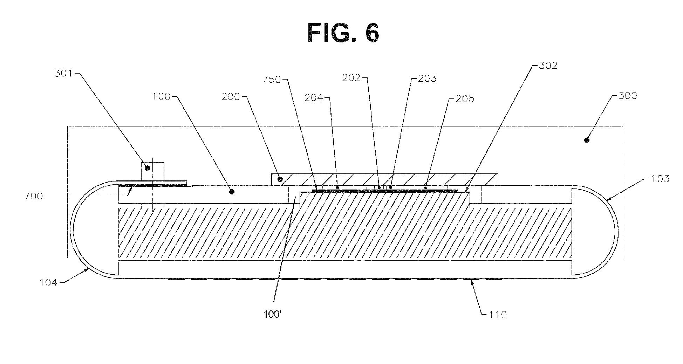

The electrical connection between the overlapping sections 101' and 104' may be achieved with an adhesive bond technique, also known as ACF-bonding, by using an anisotropic electrically conductive film 700 (see Fig. 6), which allows to distribute electrical signals between the first and second rigid parts 101 and 102 of the flexible PCB 100. The electrical connections between the optical device 200 and the electrical interface elements 110 may be provided by methods known in the art, such as conductive pathways embedded in the carrier substrate. The electrical interface elements 110 may be provided as a square array of metallic dots of LGA type, suitable for electrically connecting to a mating structure of a socket connector.

The flexible PCB 100 may be formed from a single rigid circuit board by reducing the board thickness on the areas where the flex part 103 and the flex tail 104 are to be defined. In an alternative configuration, the flex part and the flex tail may be provided as separate parts made from a flexible material and which are mechanically and electrically connected to the first and second rigid parts for forming a flexible PCB with the design shown in Fig. 2.

The above design of the flexible PCB 100 makes possible to achieve a higher packaging density as it uses opposite sides of the optical module 1 for spatially distributing the electrical and optical interfaces of the optical module 1, in comparison with an approach where both interfaces would be provided on a same side.

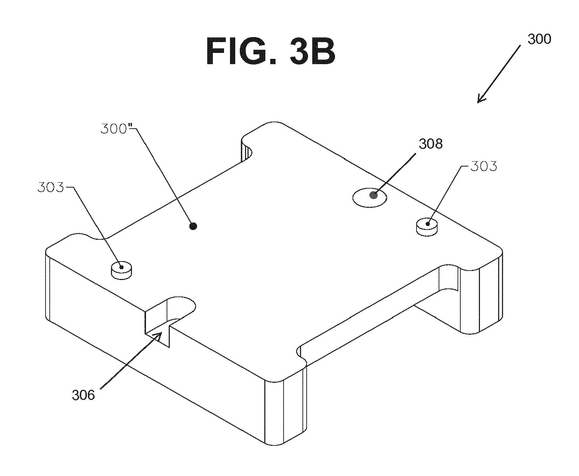

As mentioned above, the primary heat sink 300 is provided with the features adapted to improve the mechanical and thermal interfaces between several parts of the optical module 1, as it will now be described in further detail with reference to Figs. 3A and 3B.

In order to facilitate the mechanical alignment and stability of the flexible PCB 100 on the primary heat sink 300, the flexible PCB 100 may be provided with guiding structures that match corresponding guiding structures provided on the primary heat sink 300. In order to facilitate alignment during the assembly of the optical module 1, the inner body 300 may include guiding structures 303 for mating with corresponding guiding structures 107 on the secondary side 102 of the flexible PCB 100. The secondary side 102 of the flexible PCB 100, then comprises guiding structures 108 and 109, which aligns to guiding features 601 and 602 on the socket connector 600, as it will be described later.

As shown in Fig. 2, the flexible PCB 100 may include guiding holes 106 on the end sections 101' and 104'. The flexible PCB 100 may also comprise a first set of one or more guiding structures in the second rigid part 102, such as guiding holes 107, adapted to mate with corresponding guiding means provided on the second side 300" of the primary heat sink 300. In addition, a second set of one or more guiding structures 108 and 109 may also be provided on the second rigid part 102 for allowing the guiding structures 601 and 602 provided on the socket connector 600 for aligning the module (via the second side 102 of the PCB 100) and the socket connector 600.

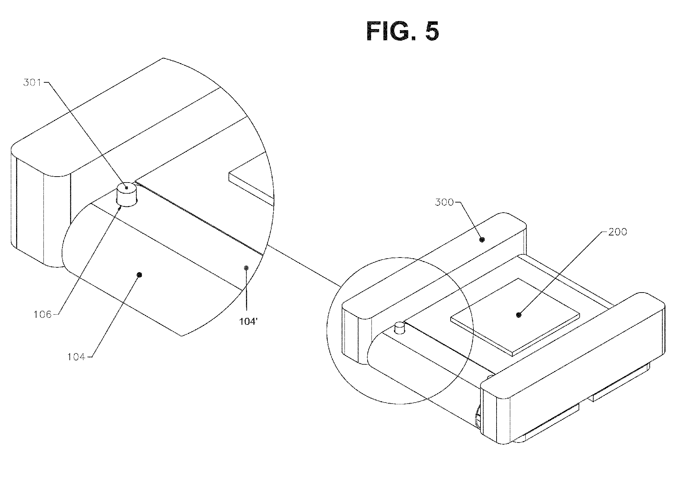

Referring to Fig. 3A, which shows a perspective representation of the primary heat sink 300 viewed from a top side, the primary heat sink 300 includes guiding structures on a first side where the first rigid part 101 is to be mounted. In the illustrated example, such guiding structures are guiding pins 301 with a selected shape and height so as to engage with the guiding holes 106 of both overlapping end sections 101' and 104' of the flexible PCB 100. The guiding pins 301 are provided at specific locations that match with the locations of the guiding holes 106 on the flexible PCB 100 so as to align and set into place the first rigid part 101 when the flexible PCB 100 is folded around the primary heat sink 300. Since the guiding holes 106 on each of the end sections 101' and 104' are provided on matching locations that substantially coincide when the two end sections overlap on the first side 300' of the flexible PCB 100, the guiding pin 301 also serves the function of securing the two end sections together. A detail of a guiding pin 301 engaged with corresponding matching holes of the end section 104' overlapping the end section 101' is shown in Fig. 5.

The primary heat sink 300 may also be provided with one or more guiding structures on a second side 300" where the second rigid part 102 of the flexible PCB 100 is to be mounted, for aligning and setting into place the second rigid part 102. As shown in Fig. 3B, similarly to the guiding structures provided on the top side 300' of the primary heat sink 300, the guiding structures 301 on the bottom side 300" are preferably guiding pins 303 provided at specific locations so as to mate with the guiding holes 107 of the second rigid part 102. As mentioned above, the second side 102 of the carrier substrate 100 may comprise a set of guiding structures 108 and 109 to mate to matching guiding structures 601 and 602 on the socket connector 600 in order to align the electrical interface between optical module and socket. Such aligning structures may include a guiding hole 108 and/or a re-entrance 109 matching the alignment pin 601 and the alignment flange 602 of the socket connector 600 shown in figure 1. As shown in Fig. 3B, the primary heat sink 300 may also include recesses 306 and 308 on the bottom side 300", which are only used for giving space to the socket guiding structures 601 and 602.

Although the flexible PCB 100 design maximizes the area of contact with the primary heat sink 300, the primary heat sink 300 may comprise additional features that provide an efficient thermal connection with a hotspot of the optical module 1, as it will be now described with reference to Figs. 3A and 6.

As shown in Fig. 3A, the primary heat sink 300 comprises a thermal pedestal 302 provided, such as an elevation on a central area of the top side 300', located immediately below an area where the optical device 200 is mounted on the carrier substrate 100. The thermal pedestal 302 is dimensioned so as to establish thermal contact with components of the optical device 200 through an opening 100' provided in the carrier substrate 100 below the optical device 200 as illustrated in Fig. 6. In order to keep a low thermal resistance, a thermal interface material 750 may be provided between the thermal pedestal 302 and components of the optical device 200, such as the VCSEL and PIN dies 202, 203, and the integrated circuits 204 and 205.

In order to establish thermal coupling with the external heat sink 500, the primary heat sink 300 may be provided with one or more thermal ports. As shown in Figs. 3A, the primary heat sink 300 includes two thermal blocks 304 provided at opposed lateral sides of the primary heat sink 300. The two thermal blocks are arranged in a plane parallel to the optical coupling direction L so as not to block the coupling with the optical fiber 800. The thermal ports 304 have a shape adapted to engage with corresponding structures provided on the contacting side of the external heat sink 500, thereby establishing a stable mechanical and thermal coupling with the external heat sink 500.

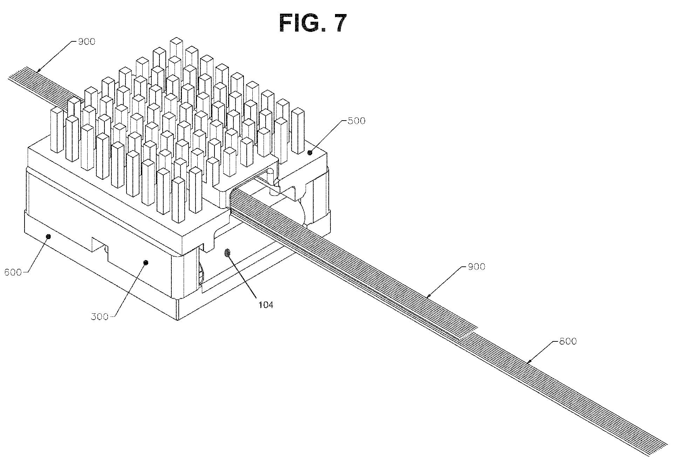

Fig. 7 shows a perspective view of the optical module 1 in which the external heat sink 500 and the primary heat sink 300 are assembled together. The external heat sink 500 may be provided with a groove or cavity on a side that faces the optical device 200 and the primary heat sink 300 along the longitudinal direction L for passing the optical fiber connection 800 to the optical interface 400 mounted on the optical device 200. The groove may extend along the whole longitudinal length of the external heat sink 500 for allowing fiber connections 900 from adjacent optical modules (not shown) to pass through the optical module 1. This configuration facilitates fiber handling and also saves space around the optical module 1 that can be used for arranging other electronic devices or optical modules.

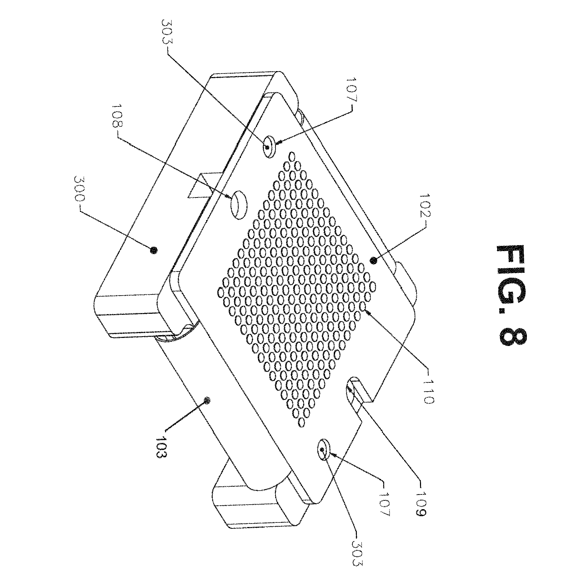

Fig. 8 illustrates a further perspective representation of the flexible PCB 100 wrapped around the primary heat sink 300, when viewed from the bottom side, and showing the matching between the guiding structures 107 provided on the second rigid part 102 and the underlying guiding structures 303 of the primary heat sink 300. The guiding structures 108 and 109 are used for aligning to the socket guiding structures 601 and 602. The primary heat sink 300 for the optical module 1 may be advantageously produced from a single piece of a high thermal conductivity material using techniques known in the art. The thermal pedestal 302 is advantageously shaped as an elevation on a central part of the top side 300' of the primary heat sink 300 over which the optical device 200 will be mounted. The guiding structures 301 and 303 and the thermal ports 304 are also preferably formed on the same piece of high thermal conductivity material. However, any of the thermal pedestal 302, the guiding structures 301 and 303, and the thermal ports 304 may be produced as separate elements to be assembled on the primary heat sink.

In conclusion, the present invention provides an optical module suitable for mid-board optical applications with a module design based on an inner metal body that functions as primary heat sink having a number of features that improve thermal, electrical, optical and mechanical interfaces, thereby achieving the required high density performance.

Although certain features of the above exemplary embodiments were described using terms such as "top", "bottom", and "upper", these terms are used for the purpose of facilitating the description of the respective features and their relative orientation within the optical module only and should not be construed as limiting the claimed invention or any of its components to a particular spatial orientation. Moreover, although the present invention has been described above with reference to mid-board optical modules, the principles of the present invention can also be advantageously applied to other types of optical modules that involve thermal, optical and electrical interfacing so as to achieve dense packaging of such devices.

### Reference Signs

- 1: optical module
- 100: carrier substrate, flexible printed circuit board (PCB)
- 101: first rigid part of the flexible PCB
- 100': opening in first rigid part
- 101': end section of first rigid part
- 102: second rigid part of flexible PCB
- 103: flex part of flexible PCB
- 104: flex tail of flexible PCB
- 104': end section of flex tail
- 106: guide holes
- 107: first set of guide structures in bottom side of flexible PCB, through-holes
- 108, 109: second set of alignment structures in bottom side of flexible PCB,
- 108: through-hole
- 109: reentrance
- 110: electrical interface elements
- 200: optical device
- 202: VCSEL die
- 203: PIN die
- 204, 205: integrated circuits
- 300: inner body or primary heat sink
- 300': first side (top side) of primary heat sink
- 300": second side (bottom side) of primary heat sink
- 301: guiding pins on top side of primary heat sink
- 302: thermal pedestal on top side of primary heat sink
- 303: guiding pins on bottom side of primary heat sink
- 304: thermal ports of primary heat sink
- 306, 308: guiding structures on primary heat sink for socket connector
- 400: optical interface
- 500: external heat sink
- 600: socket connector
- 601, 602: guiding structures of socket connector
- 700: anisotropic electrically conductive film
- 750: thermal interface material
- 800: optical fiber connection
- 900: optical fiber connections passing-through the MBOM

## Claims

1. An optical module for high-speed data communications, comprising:
a carrier substrate (100) adapted to mount an optical device (200); and
a primary heat sink (300) adapted to transfer heat produced by the optical device;
wherein at least one of a first side (300') and a second side (300") of the primary heat sink is adapted to mount the carrier substrate thereon.

2. The optical module of claim 1, wherein the primary heat sink further comprises:
a thermal pedestal (302) adapted to establish thermal coupling with the optical device mounted on the carrier substrate.

3. The optical module of claim 1 or claim 2, wherein the thermal pedestal is an elevation area on the side of the primary heat sink facing the optical device and adapted to be thermally interfaced with the optical device through an opening (100') provided in the carrier substrate below the optical device.

4. The optical module of any one of claims 1 to 3, wherein the primary heat sink further comprises:
guiding means (301, 303) adapted to mate with corresponding guiding structures (106, 107) provided on the carrier substrate so as to align the carrier substrate,
the guiding means being provided on at least one of the first side and the second side.

5. The optical module of any one of claims 1 to 4, wherein the carrier substrate is a flexible carrier substrate.

6. The optical module of any one of claims 1 to 5, wherein the carrier substrate comprises:
a first rigid part (101) adapted to arrange the optical device thereon;
a second rigid part (102) adapted to arrange an electrical interface of the optical module; and
a flexible intermediate part (103) adapted to permanently connected the first rigid part to the second rigid part,
wherein the first rigid part and the second rigid part are adapted to be respectively mounted on the first side and the second side of the primary heat sink, and
the flexible intermediate part is adapted to extend from the first side to the second side of the primary heat sink when the carrier substrate is mounted on the primary heat sink.

7. The optical module of claim 6, wherein the carrier substrate further comprises a flexible tail part (104) connected to an edge of the second rigid part opposed to an edge connected to the flexible intermediate part and comprising an end section (104') adapted to overlap with an end section (101') of the first rigid part at the first side of the primary heat sink,
wherein each of the end sections (104', 101') of the flexible tail part and the first rigid part comprise one or more matching guiding holes (106) adapted to mate with one or more guiding pins (301) provided on the first side of the primary heat sink in order to establish an electrical connection.

8. The optical module of claim 6 or claim 7, wherein the second rigid part (102) further comprises:
a first set of guiding structures (107) adapted to mate with corresponding guiding means (303) provided on the second side of the primary heat sink for aligning the second rigid part; and/or
a second set of guiding structures (108, 109) adapted to allow guiding structures (601, 602) provided on a socket connector (600) to pass through for engaging with the second rigid part (102) of the carrier substrate (100).

9. The optical module of any one of claims 1 to 8, wherein the primary heat sink further comprises:
a thermal port (304) adapted to establish thermal coupling with a secondary heat sink (500) provided above the optical device and the carrier substrate.

10. The optical module of any one of claims 1 to 9, wherein said thermal port comprises at least two thermal ports provided at lateral sides of the primary heat sink parallel to an optical coupling direction (L).

11. The optical module of claim 9 or claim 10, wherein the secondary heat sink (500) and the primary heat sink (300) are shaped so as to form an opening in the optical module for passing a fiber ribbon (900) through the optical module.

12. The optical module of any of claims 1 to 11, wherein the primary heat sink is formed from a single piece and/or is made from one or more high thermal conductivity materials, such as metal materials.

13. A method of producing a primary heat sink for an optical module according to any one of claims 1 to 12, comprising the steps of:
providing a piece of a high thermal conductivity material;
forming at least one of a first side and a second side of the primary heat sink (300) that are adapted to mount the carrier substrate (100) thereon.

14. The method of claim 13, further comprising the step of:
forming a thermal pedestal (302) adapted to establish thermal coupling with the optical device (200, 202, 203, 204, 205) mounted on the carrier substrate on the first side of the primary heat sink.

15. The method of claim 13 or claim 14, further comprising the steps of:
forming guiding means (301, 303) on at least one of the first side and the second side of the primary heat sink for mating with corresponding guiding structures (106, 107) provided on the carrier substrate; and
providing a thermal port (304) adapted to establish thermal coupling with a secondary heat sink (500) provided above the optical device and the carrier substrate.
